# EUROPEAN PATENT APPLICATION

(11) **EP 4 636 257 A1**
(43) Date of publication of application: **22.10.2025**
(21) Application number: 24171326.2
(22) Date of filing: 19.04.2024
(51) Int. Cl.: F15B 9/12, B64C 13/40, F15B 13/04, F15B 19/00, F16K 11/07, F16K 31/60, F16K 31/52, F15B 18/00

(54) **SERVO VALVE**

(71) Applicant: Microtecnica S.r.l., 10126 Turin (IT)
(72) Inventor: MOLINELLI, Dario, 20866 Carnate (IT); BERTONI, Luca, 20133 Milano (IT); GUGLIELMINO, Luca Ig, 10078 Venaria Reale (IT); ARTONI, Ettore Egisto, 20132 Milano (IT)
(74) Representative: Casalonga

(57) **Abstract**

A servo valve comprises a housing (11) defining a wetted zone for holding a fluid. The servo valve includes a fluid transfer valve assembly (22) disposed in the housing (11). The fluid transfer valve assembly (22) comprises a fluid supply port (16) and a control port (18). A spool (12) is arranged to control flow of fluid through a fluid pathway from the fluid supply port (16) to the control port (18). The spool (12) is movable along a spool axis (14). A lever (28) is pivotally mounted to the housing (11) and engaged with the spool (12) via a hinged connection (24). The lever (28) is arranged to pivot and axially move the spool (12) along the spool axis (14). A seal (26) is provided to isolate the wetted zone from a non-wetted zone. The spool (12) is positioned within the wetted zone and the lever (28) is positioned at least partially within the wetted zone.

## Description

### TECHNICAL FIELD

The invention relates to servo valves and aircraft controls, more particularly to mechanical hydraulic servo valves for hydraulic actuators used to transfer quantities of, or manage the flow of fluid to said actuators.

### BACKGROUND

Servo valves find a wide range of applications for controlling fluid flow to effect driving or control of another part e.g. an actuator. Hydraulic actuators typically include a servo valve (or pilot valve) which controls the supply of pressurised fluid to a piston operatively connected to a load. Electro-hydraulic servo valves work to convert an electrical input signal into a hydraulic output by controlling the position of a valve spool with an electrical signal (e.g., using a torque motor to change the position of the spool). Mechanical hydraulic servo valves work to convert a mechanical input into a hydraulic output.

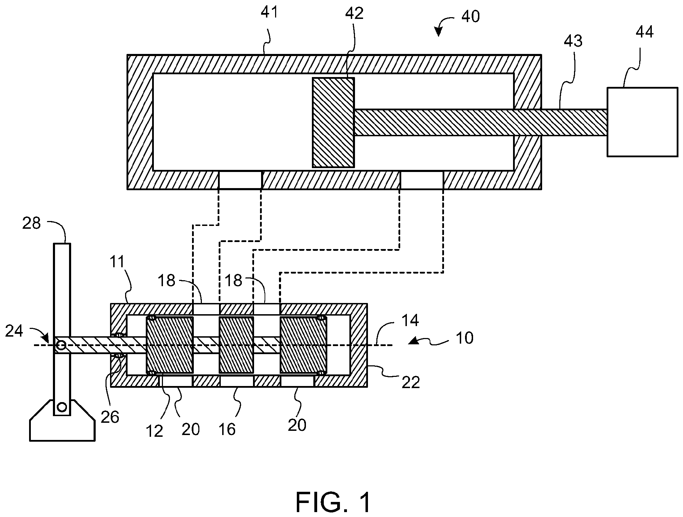

In known mechanical hydraulic servo valves 10 (e.g., as shown in Figure 1) a force is applied directly to a valve spool 12 to move the spool in a linear direction along a spool axis 14, such that the spool opens a fluid supply port 16 port in a fluid transfer valve assembly 22 (e.g., a housing or sleeve) linked to a source of pressurised fluid (e.g., a hydraulic pump) and/or a control port 18, e.g., in fluid communication with a piston 42 of an actuator 40 mounted on an actuator or output shaft 43. In a hydraulic actuator, this provides a fluid pathway for the pressurised fluid to act on a side of the piston 42. The pressurised fluid acts on the piston 42 to provide a force for moving the actuator (e.g., moving an actuator housing or a shaft operatively connected to the piston) which may be much greater than the force applied directly to the piston (the applied force is "amplified" by the pressurised fluid). Accordingly, hydraulic actuators comprising such mechanical hydraulic servo valves 10 are often referred to as "force amplifiers". In some configurations, a flow of pressurised fluid may be selectively directed to either side of an actuator piston 42 so as to selectively provide a forward or rearward force on a load 44. Fluid on the opposite side of the piston may be communicated by a fluid pathway to a fluid return or reservoir of fluid 20 at a lower pressure.

Returning to the servo valve 10, although the valve spool 12 itself is in a wetted zone (e.g., surrounded by hydraulic fluid), a mechanical interface 24 is provided outside of the wetted zone (e.g., in a dry zone) so as to allow the direct application of force to the valve spool 12. The spool 12 or fluid transfer valve assembly 22 is provided with axial or linear seals 26 to isolate the wetted zone from the mechanical interface 24. The seals 26 generally comprise elastomeric materials. The seals may be provided in a groove in the spool 12 or the housing and are resiliently biased against an opposing surface (e.g., a sealing surface on the other of the spool 12 or the housing). The mechanical interface 24 is typically a hinged connection linked to a control lever 28 in the dry zone which is operated from the cockpit of an aircraft (e.g., via one or more intermediary mechanical links).

When used in aircraft controls, such mechanical hydraulic servo valves 10 are subject to stringent quality controls. Mechanical hydraulic servo valves are also subject to high stress, high frequency adjustments and high frequency vibrations. This can lead to an accelerated rate of wear on the seals 26 used to isolate the wetted zone from the non-wetted or dry zone of the mechanical hydraulic servo valve. As the seals 26 wear, material transfer occurs between the seals 26 and the spool 12 or fluid transfer valve assembly 22. This wear and/or material transfer leads to a change in resistance of the spool's axial movement (e.g., an increased resistance to move the spool 12 to open the fluid supply port 16 linked to a source of pressurised fluid and/or a control port 18).

A change in resistance of a mechanical hydraulic servo valve 10 (or the input resistance of a mechanical hydraulic actuator) can be catastrophic to an aircraft. For example, an increased resistance can reduce the responsiveness of the servo valve 10 and actuator 40, cause or conceal further mechanical failures and cause autopilot failure (which, for example, may be configured to control an aircraft with precisely modulated mechanical/force inputs). Accordingly, as soon as a change in resistance of a mechanical hydraulic servo valve 10 occurs or is detected, the aircraft may need to be grounded due to autopilot failure so that the servo valve 10 may be serviced to replace the axial seals.

There is a need to provide an improved servo valve.

### SUMMARY

In one aspect a servo valve is provided comprising: a housing defining a wetted zone for holding a fluid (e.g., a working fluid); a fluid transfer valve assembly disposed in the housing, the fluid transfer valve assembly comprising a fluid supply port and a control port; a spool arranged to control flow of fluid through a fluid pathway from the fluid supply port to the control port, wherein the spool is movable along a spool axis; a lever pivotally mounted to the housing and engaged with the spool via a hinged connection, wherein the lever is arranged to pivot and axially move the spool along the spool axis; and a seal configured to isolate the wetted zone from a non-wetted zone. The spool is positioned within the wetted zone and the lever is positioned at least partially within the wetted zone.

In another aspect a servo valve is provided comprising: a housing defining a wetted zone for holding a fluid (e.g., a working fluid); a fluid transfer valve assembly disposed in the housing, the fluid transfer valve assembly comprising a fluid supply port and a control port; a spool arranged to control flow of fluid through a fluid pathway from the fluid supply port to the control port, wherein the spool is movable along a spool axis; a lever pivotally mounted to the housing and engaged with the spool via a hinged connection, wherein the lever is arranged to pivot and axially move the spool along the spool axis; and a rotative seal configured to isolate the wetted zone from a non-wetted zone.

In another aspect an actuator is provided comprising one or more servo valves according to any of the above aspects.

In another aspect an actuator is provided comprising: a housing defining a wetted zone for holding a fluid (e.g., a working fluid); a fluid transfer valve assembly disposed in the housing, the fluid transfer valve assembly comprising a fluid supply port and a control port; a spool arranged to regulate flow of fluid through a fluid pathway from the fluid supply port to the control port, wherein the spool is movable along a spool axis; a lever pivotally mounted to the housing and engaged with the spool via a hinged connection, wherein the lever is arranged to pivot and axially move the spool along the spool axis; and an eccentric bushing configured to adjust a null position of the lever and/or spool.

The wetted zone may refer to a region or sealed volume inside the servo valve or actuator. The wetted zone is intended or configured to be in contact with a fluid (the working fluid) of the servo valve or actuator. The wetted zone may be configured to hold the fluid under pressure (e.g., relative to an ambient pressure of a region outside of the wetted zone). The fluid may be a liquid (e.g., oil or any hydraulic fluid) or a gas.

The non-wetted zone or dry zone may refer to an ambient region or a volume exterior to the wetted zone that is not intended or configured to be in contact with the fluid (e.g., a region or volume outside of the sealed volume).

The null position or neutral position may refer to a position in which the servo valve is inactive. The null position may refer to a resting position or mid-position of the lever and/or spool. The null position of the spool may refer to a position in which the spool does not communicate fluid from the fluid supply port to the control ports(s) and/or return port(s). The null position of the lever may refer to a position in which the lever is at an equilibrium position with the spool (e.g., under the influence of a feedback link) such that the lever does not displace the spool from the spool's respective null position.

The following optional features may be included in any of the above aspects, alone or in any combination.

The lever may be mounted to a shaft, the shaft being rotatable about a shaft axis.

The shaft may provide or be configured as a pivot point for the lever (e.g., the shaft axis may provide the pivot point around which the lever is pivotally mounted).

The shaft axis may be perpendicular to the spool axis and at a radial distance from the spool axis such that the shaft axis and spool axis do not intersect.

The shaft may be positioned at least partially within the wetted zone.

The seal may comprise or consist of a rotative seal (e.g., a lip seal). The rotative seal may be configured to create a seal around a rotating shaft.

The lever may be a first lever. The servo valve or actuator may comprise a second lever. The second lever may be provided in the non-wetted zone. The second lever may be configured to rotate or pivot the first lever.

The second lever may be mounted to the shaft.

The control port may be a first control port and the fluid transfer valve assembly may comprise a second control port. The fluid transfer valve assembly may comprise one or more return ports. The fluid supply port may be a first fluid supply port and the fluid transfer valve assembly may comprise a second fluid supply port.

The hinged connection may comprise a ball joint and socket. The socket may be substantially cylindrical.

The actuator may comprise an eccentric bushing configured to adjust a null position of the lever.

The eccentric bushing may be a rotatable bushing with an eccentric bore. Rotation of the eccentric bushing may adjust the null position of the lever. The eccentric bushing may be in a or the non-wetted zone. The eccentric bushing may be arranged to adjust a null position of the second lever.

The actuator may comprise a locking member configured to engage with the eccentric bushing and lock the eccentric bushing in position at any one of a plurality of adjustment positions, each adjustment position corresponding to a different null position of the lever.

The actuator may comprise a plate for locking a or the position of the eccentric bushing.

The actuator may comprise two servo valves according to any of the above aspects. The actuator may comprise a first servo valve and a second servo valve each having a lever. The eccentric bushing may be configured or arranged is arranged to align the lever of the first servo valve with the lever of the second servo valves. The actuator may comprise two eccentric bushings, each configured to adjust a null position of a respective lever.

The actuator may comprise an input arrangement. The input arrangement may include an input lever, a sum lever and/or a bell crank.

The actuator may comprise a feedback link or other connection between the servo valve and a body or housing of the actuator. The actuator may comprise a feedback link or other connection between the servo valve and an output shaft of the actuator (also referred to as an actuator shaft). The feedback link or other connection may be connected to the servo valve via the input lever, the sum lever and/or the bell crank.

Preferred embodiments will now be described with reference to the drawings.

### BRIEF DESCRIPTION OF THE DRAWINGS

Fig. 1 shows schematic sectional view of a known mechanical hydraulic servo valve.
Fig. 2 shows schematic sectional view of an example servo valve along the line 2-2 of Fig. 3.
Fig. 3 shows schematic sectional view of an example servo valve along the line 3-3 of Fig. 2.
Fig. 4 shows a perspective view of an example actuator.
Fig. 5 shows a sectional view of a mechanical interface of an example servo valve
Fig. 6 shows an exploded perspective view of a servo valve interface including a partial sectional view of locking bolt.

For ease of reference, like reference numerals are used to indicate the same or substantially similar features in each of the figures.

### DETAILED DESCRIPTION

A servo valve 10 as described below is typically used in an actuator 40, for example in a hydraulic actuator such as a helicopter tail rotor servo actuator or an actuator for wing flap system (although other applications are envisaged). The servo valve 10 is controlled by a mechanical input or a direct application of force to a spool 12 for the control of a flow of fluid that is output, e.g., to control the movement of an actuator. Used herein "fluid" may refer to any suitable fluid including, for example, hydraulic fluids, oils or pressurised gasses.

Used herein "direct application of force" refers to a mechanical input and does not preclude the use of one or more intermediate components such as mechanical links (e.g., input levers, sum levers and/or bell cranks) and/or an electrical apparatus configured to provide said mechanical input. For example, the application of force on a mechanical hydraulic servo valve by an autopilot system would still constitute a direct application of force on the spool.

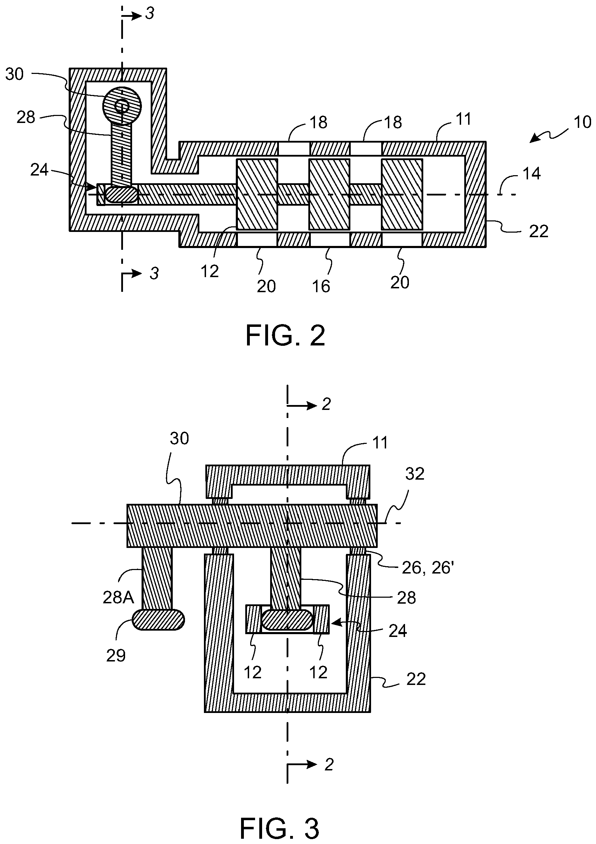

Figure 2 shows a servo valve 10 (in this case a mechanical hydraulic servo valve, although the disclosure is generally applicable to any type of servo valve) having a housing 11 defining wetted zone and a spool 12.

Used herein a "wetted zone" refers to a region or sealed volume which, in use, is in contact with a working fluid of the servo valve 10, which working fluid is held under pressure within the servo valve 10. The working fluid may be a liquid, such as oil or a hydraulic fluid, or the working fluid may be a pressurised gas (e.g., if configured as a pneumatic servo valve). Similarly, a non-wetted or dry zone refers to a region or volume not in contact with the working fluid in use, e.g. exterior to/outside of the wetted zone.

The spool 12 is arranged to move in a linear direction along a spool axis 14, such that the spool 12 may control the opening and closing of a fluid supply port 16 in a fluid transfer valve assembly 22 (e.g., disposed or formed in the housing 11) and/or a control port 18. In the example shown, the fluid transfer assembly 22 includes a fluid supply port 16, two control ports 18 and two fluid return ports 20. The spool 12 may be configured such that the opening of a first fluid pathway via the supply port 16 from a source of pressurised fluid simultaneously opens a second fluid pathway via one of the return ports 20 to a fluid reservoir at a lower pressure than the source of pressurised fluid. The fluid transfer valve assembly 22 may alternatively comprise two supply ports 16 and a single return port 20 or the return ports 20 may be omitted entirely such the servo valve serves to control the flow of supplied fluid only.

A mechanical interface is provided in the wetted zone. The mechanical interface may include a flexible or hinged connection 24 linked to a lever 28 (e.g., a control lever). The mechanical interface may be integral with the spool 12 or may be provided by one or more intermediate components (e.g., a spool shaft connected to the spool 12). In the illustrated example, a hinged connection 24 is provided by a ball joint and socket, although any suitable hinged connection could be used. The lever 28 is disposed at least partially in the wetted zone in the housing 11 and may be pivotally mounted to the housing 11 such that the lever 28 is arranged to pivot and axially move the spool 12 along the spool axis 14. In the illustrated example, the lever 28 is entirely positioned in the wetted zone and a rotatable shaft 30 provides a pivot point for the lever 28. The lever 28 is connected to, and extends from, the rotatable shaft 30.

With reference to Figure 3, the shaft 30 is shown as partially disposed within the wetted zone. Note, this disclosure extends to arrangements wherein the shaft 30 is fully outside the wetted zone.

The shaft 30 is provided with one or more seals 26 to isolate the wetted zone from a non-wetted or dry zone. Of course, the location of these seals 26 depends on the point of transition from the wetted zone to the non-wetted or dry zone, which as noted above may not be along the shaft 30. As such these seals 26 may be located elsewhere as required.

In the example shown, the seal 26 is annular and provided circumferentially about the shaft 30 at a radial distance from a shaft axis 32. The seal 26 may be provided in a groove or slot in the housing 11. Additionally or alternatively, the seal 26 or components thereof may be provided in a groove or slot in the shaft 30. The shaft 30 is arranged to rotate in place about the shaft axis 32 (e.g., without permitting axial movement of the shaft 30).

With the above arrangement the seal 26 is subjected only to the rotational movement of the shaft 30. Further, the extent of relative movement (causing frictional contact/ or rubbing) between the seal 26 and opposing sealing surfaces is greatly reduced compared with conventional arrangements. The use of the lever 28 on a pivot allows for a relatively large axial movement of the spool 12 to be translated into a relatively small rotational movement of the shaft 30. It is believed that the reduction in relative movement between sealing surfaces as achieved with the aspects and embodiments described herein reduces the rate of wear on the seal 26.

It is also believed that the provision of a rotative sealing surface may reduce the rate of material transfer from the seal 26 to the opposing sealing surface. For example, any material transfer that occurs may be limited to a radial line of contact. In contrast, and for example, a seal around an axially moving shaft endures a contact area, as opposed to a radial line.

As further illustrated in Figure 3, a second lever 28A (e.g., a secondary control lever or an input control lever) is provided. This may not be present, and other means of rotating the shaft 30 could be provided as necessary.

The second lever 28A is configured to provide a rotational input to the shaft 30. Although illustrated on the same side of the shaft 30 (i.e., the same circumferential location), it should be noted that a second lever 28A may be positioned at any circumferential location about the shaft 30 so as to impart rotational movement to the shaft (e.g., instead of a U-shape in cross-section, the levers 28, 28A and shaft 30 may form a substantially Z-shape, or any other suitable shape).

The provision of a second lever 28A to provide rotational input to the shaft 30 further reduces the observable effects of any change in resistance caused by material transfer from the seal 26. For example, due to the leverage provided by the second lever 28A, a larger input rotational movement of the second lever 28A (i.e., a larger arc length) is translated into a smaller output rotational movement of the shaft 30 (i.e., a smaller arc length). Therefore, any observable increase in an input resistance caused by material transfer from the seal 26 is minimised through said leverage.

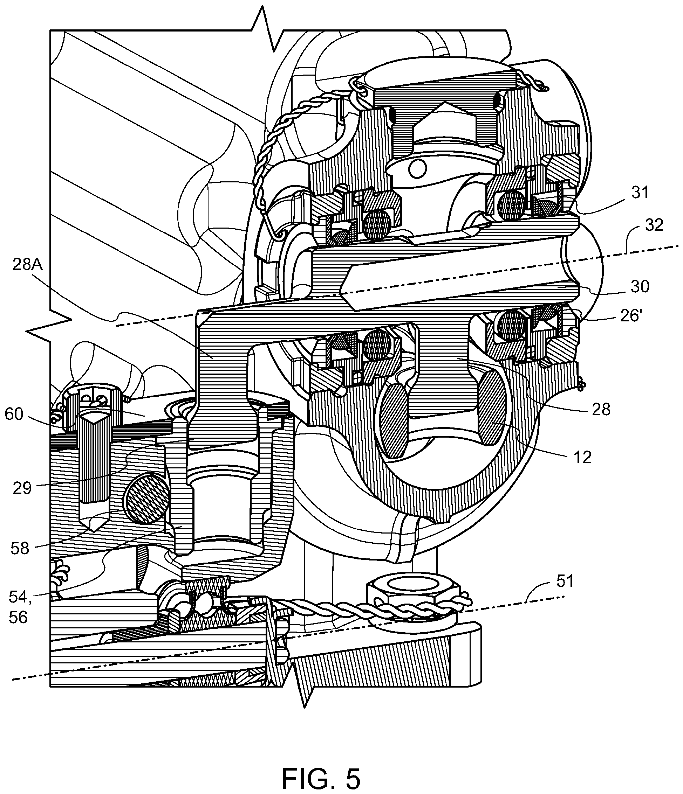

In the specific example of Fig. 5, the shaft 30 is provided with bearings 31 (see Fig. 5), which are illustrated as ball bearings but could be any suitable type. The shaft 30 is also provided with rotative seals 26' configured to seal between a rotor and a stator. The provision of bearings 31 and rotative seals 26' may reduce rotational resistance of the shaft 30. It is believed that the use of rotative seals 26' (also referred to as lip seals) may further reduce seal wear and/or material transfer. For example, lip or rotative seals may provide a single or smaller line of contact between the seal 26 and the shaft 30, and present a smaller contact surface (e.g., compared with axial seals).

The above described arrangement allows for consistent performance wherein the necessary input loads applied to the servo valve 10 remain constant throughout the lifetime of the servo valve 10 (e.g., the resistance on spool 12 remains unchanged as the need for axial seals isolating wetted and non-wetted zones is eliminated). The rotative seals 26' may also exhibit negligible wear throughout the lifetime or service time of the servo valve 10 (e.g., until routine maintenance and replacement, e.g., as required by regulatory bodies). Thus, the servo valve 10 may be considered a time-invariant input load servo valve 10.

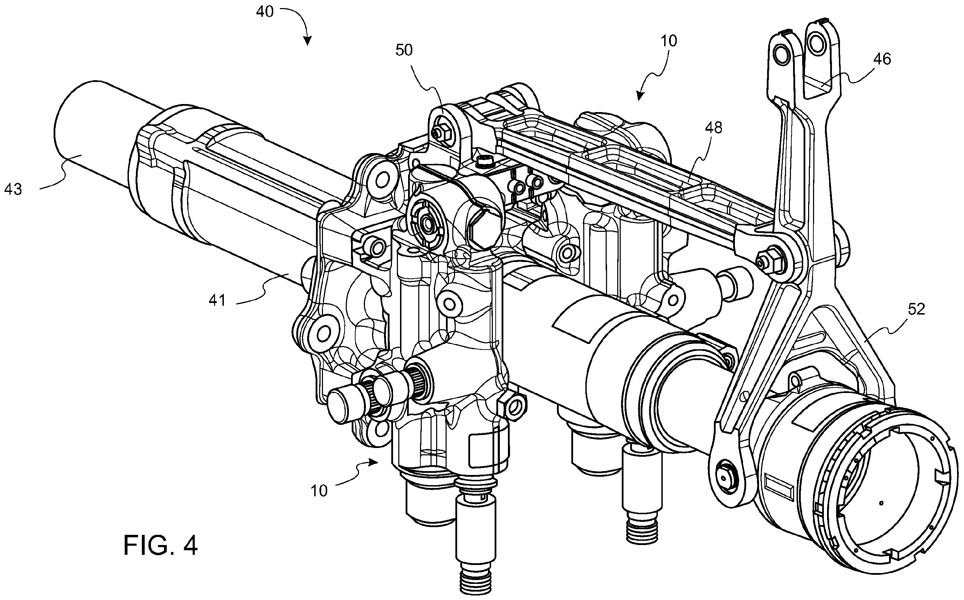

Figure 4 shows an actuator 40 including a servo valve 10 as described above and in accordance with Figures 2 and 3. In the example shown, the actuator comprises a pair of servo valves 10, one at each side of the actuator 40. The actuator 40 is configured as a helicopter tail rotor servo actuator, but could be used in any suitable application.

The actuator 40 comprises an input arrangement which may include an input lever 46 operatively connected to operator controls (e.g., cockpit controls for a helicopter pilot), a sum lever 48 arranged to scale movement of the input lever 46 and a bell crank 50 arranged to pivot or rotate about a bell crank axis 51 under the action of the sum lever 48. The bell crank 50 is linked to the second lever 28A of the servo valve 10 (e.g., secondary control lever or input control lever) such that pivoting the bell crank 50 rotates the second lever 28A, the shaft 30 and the lever 28 of the servo valve 10 so as to move the spool 12 along its axis 14.

The input arrangement includes a servo valve interface for interacting with the second lever 28A of the actuator 10. In the example shown, the bell crank 50 comprises a pair of interfaces for receiving the respective second levers 28A of the pair of servo valves 10.

Although the example shown comprises a series of intermediary levers, links and connections, other arrangements are possible. For example, other input arrangements from the cockpit to the shaft 30 or second lever 28A of the servo valve 10 may be possible without the above described input lever, sum lever and bell crank.

The actuator housing 41 may be fixed to the servo valve 10. The actuator 40 may comprise a feedback link 50 mounted to an actuator or output shaft 43 so as to provide positional feedback to the servo valve 10. For example, when the input lever 46 is tilted in a forward direction by a discrete amount (from a resting or null position), the sum lever 48 acts to rotate the bell crank 50 by a set amount which causes the spool 12 to move and open a fluid pathway to the actuator 40. Pressurised fluid may then be communicated to a side of the of the piston (not shown), which acts to move the actuator shaft 43 relative to the actuator housing 41 in the forward direction. The relative movement of the actuator shaft 43 is communicated to the feedback link 52 which orientates the input lever 46 back to its resting or null position which, in turn, acts to return the spool 12 to a resting or null position. In this way, precise positional feedback is provided such that the actuator 40 (or a load 44 connected thereto) can be moved to a plurality of different set positions. A feedback link as described may alternatively by mounted to the actuator housing.

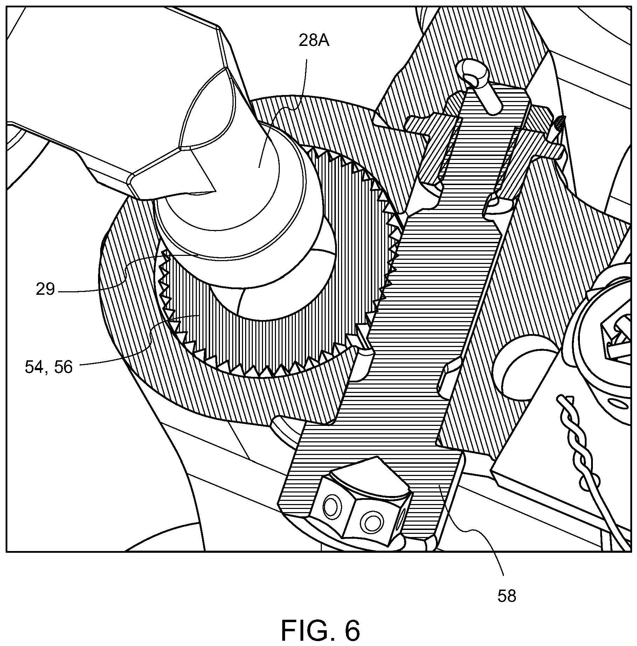

With reference to Figures 5 and 6, the interface between the second lever 28A and input arrangement comprises a ball joint 29 and socket 54 (although, similar to the first lever 28, any suitable joint could be used). In particular, the second lever 28A may be provided with a ball joint 29 and the bell crank 50 may be provided with a socket 54 (e.g., a cylindrical bore).

In the example shown, the socket 54 is provided by an eccentric bushing 56 (e.g., having an off-centred cylindrical bore) mounted to the bell crank 50. The eccentric bushing 56 may be set to a position (rotational position) by a setting bolt 58. By changing the rotational position of the eccentric bushing 56 the location of the socket 54 relative to the bell crank may be adjusted or calibrated. In this way, a null position of the lever 28 (e.g., the first lever) and, as such, the spool 12 may be adjusted. Alternatively, or additionally the pair of servo valves 10 may be synchronised with each other, for example upon installation. The setting bolt 58 may be locked in position with any suitable means, such as pins and/or endless screws to prevent any unwanted drift after the eccentric bushing 56 is set. The bell crank 50 may further comprise a locking plate 60 secured over the eccentric bushing 56 so as to hold the bushing 56 in place by an interference fit.

Although this disclosure has been described in terms of preferred examples, it should be understood that these examples are illustrative only and modifications and alterations are possible within the scope of the claims.

## Claims

1. A servo valve comprising:
a housing (11) defining a wetted zone for holding a fluid;
a fluid transfer valve assembly (22) disposed in the housing (11), the fluid transfer valve assembly (22) comprising a fluid supply port (16) and a control port (18);
a spool (12) arranged to control flow of fluid through a fluid pathway from the fluid supply port (16) to the control port (18), wherein the spool (12) is movable along a spool axis (14);
a lever (28) pivotally mounted to the housing (11) and engaged with the spool (12) via a hinged connection (24), wherein the lever (28) is arranged to pivot and axially move the spool (12) along the spool axis (14); and
a seal (26) configured to isolate the wetted zone from a non-wetted zone;
wherein the spool (12) is positioned within the wetted zone; and
wherein the lever (28) is positioned at least partially within the wetted zone.

2. The servo valve according to claim 1, wherein the lever (28) is mounted to a shaft (30), the shaft (30) being rotatable about a shaft axis (32).

3. The servo valve according to claim 2, wherein the shaft axis (32) is perpendicular to the spool axis (14) and at a radial distance from the spool axis (14) such that the shaft axis (32) and spool axis (14) do not intersect.

4. The servo valve according to claim 2 or 3, wherein the shaft (32) is positioned at least partially within the wetted zone.

5. The servo valve according to any preceding claim, wherein the seal (26) is a rotative seal (26').

6. The servo valve according to any preceding claim, wherein the lever (28) is a first lever and the servo valve comprises a second lever (28A) in the non-wetted zone configured to rotate or pivot the first lever (28).

7. The servo valve according to any preceding claim, wherein the control port (18) is a first control port and the fluid transfer valve assembly further comprises a second control port (18) and a return port (20).

8. The servo valve according to any preceding claim, wherein the hinged connection comprises a ball joint and socket.

9. An actuator comprising one or more servo valves according to any preceding claim.

10. The actuator of claim 9, comprising an eccentric bushing (56) configured to adjust a null position of the lever (28).

11. The actuator of claim 10, comprising a locking member (58) configured to engage with the eccentric bushing (56) and lock the eccentric bushing (56) in position at any one of a plurality of adjustment positions, each adjustment position corresponding to a different null position of the lever (28).

12. The actuator of claim 10 or 11, comprising a plate (60) for locking a or the position of the eccentric bushing (56).

13. The actuator of any of claims 10-12, wherein the actuator comprises two servo valves (10) according to any of claims 1-8, and the eccentric bushing (56) is arranged to align a lever (28) of a first of the servo valves (10) with a lever (28) of a second of the servo valves (10).

14. A servo valve comprising:
a housing (11) defining a wetted zone for holding a fluid;
a fluid transfer valve assembly (22) disposed in the housing (11), the fluid transfer valve assembly (22) comprising a fluid supply port (16) and a control port (18);
a spool (12) arranged to control flow of fluid through a fluid pathway from the fluid supply port (16) to the control port (18), wherein the spool (12) is movable along a spool axis (14);
a lever (28) pivotally mounted to the housing (11) and engaged with the spool (12) via a hinged connection (24), wherein the lever (28) is arranged to pivot and axially move the spool (12) along the spool axis (14); and
a rotative seal (26') configured to isolate the wetted zone from a non-wetted zone.

15. An actuator comprising:
a housing (11) defining a wetted zone for holding a fluid;
a fluid transfer valve assembly (22) disposed in the housing (11), the fluid transfer valve assembly (22) comprising a fluid supply port (16) and a control port (18);
a spool (12) arranged to regulate flow of fluid through a fluid pathway from the fluid supply port (16) to the control port (18), wherein the spool is movable along a spool axis (14);
a lever (28) pivotally mounted to the housing (11) and engaged with the spool (12) via a hinged connection (24), wherein the lever (28) is arranged to pivot and axially move the spool (12) along the spool axis (14); and
an eccentric bushing (56) configured to adjust a null position of the lever (28).
